# EUROPÄISCHE PATENTANMELDUNG

(11) **EP 1 142 943 A2**
(43) Veröffentlichungstag der Anmeldung: **10.10.2001**
(21) Anmeldenummer: 01106989.5
(22) Anmeldetag: 21.03.2001
(51) Int. Cl.: C08J 9/32, A61G 7/057, C08L 75/04

(54) **Werkstoff aus einem Polyurethan-Gel**

(30) Priorität: 03.04.2000 DE 10016539
(71) Anmelder: TechnoGel GmbH & Co. KG, 37115 Duderstadt (DE)
(72) Erfinder: Stender, Adolf, 37115 Duderstadt (DE); Benkhoff, Herrmann, 37115 Duderstadt (DE)
(74) Vertreter: Läufer, Martina

(57) **Zusammenfassung**

Ein mit einem expandierten Calciumcarbonat gefülltes Polyurethan-Gel bietet einen verbesserten Werkstoff für viele Anwendungsgebiete, wobei die vorteilhaften Geleigenschaften erhalten bleiben, zugleich aber ein niedriges spezifisches Gewicht und eine insgesamt geringere Wärmeleitfähigkeit erreicht wird.

## Beschreibung

Die Erfindung betrifft einen Werkstoff aus einem Polyurethan-Gel und ein Verfahren zu seiner Herstellung.

Polyurethangele, d.h. untervernetzte Reaktionsprodukte auf der Basis von Polyolen und Polyisocyanaten sind an sich bekannt. Die bekannten Reaktionsprodukte werden beispielsweise als druckverteilende Elemente in Polstern für Rollstühle (EP 0 511 570 B1) oder Fahrradsätteln (US 5330249) eingesetzt.

Das Patent EP 57838 beansprucht Gele zur Vermeidung von Dekubitus, welche durch eine niedrige Kennzahl, d.h. durch sogenannte Untervernetzung gekennzeichnet sind. Sie werden durch die Umsetzung eines Polyisocyanaten mit langkettigen Polyolen, die frei von kurzkettigen Anteilen sein sollen, hergestellt. Diese formstabilen Gele aus Polyurethan-Rohstoffen können als Matratzen, Matratzeneinlagen, Automobilsitze und als Polstermaterial zum Einsatz kommen. Das Patent EP 511570 offenbart verbesserte Gele aus Polyolen und Polyisocyanaten mit niedrigen Kennzahlen, die aus Gemischen von langkettigen und kurzkettigen Polyethern hergestellt werden. Die verarbeitungstechnisch günstiger herzustellenden Polyol- und Polyisocyanatgemische finden ihre bevorzugte Anwendung als Polstermaterial in der Schuhindustrie, als Auflagen zur Vermeidung bzw. Verhinderung von Verletzungen, Gesichtsmasken, als Abpolsterungen von Pferdesätteln sowie in weiteren Anwendungen.

Die bekannten Polyol- und Polyisocyanatgemische weisen für die oben beispielhaft genannten Anwendungen stets den Nachteil des hohen Eigengewichts und die damit verbundene hohe Wärmekapazität auf. Aufgrund des hohen Eigengewichts von etwa 1,0 g/cm³ ist der Einsatz auf Anwendungen beschränkt, bei denen das Gewicht in Relation zu den hervorragenden druckverteilenden Eigenschaften eine untergeordnete Rolle spielt. Darüber hinaus kann die hohe Wärmekapazität des Polyurethan-Gels im direkten Körperkontakt als unangenehm empfunden werden, da Körperwärme zum Aufwärmen der jeweiligen Gelmassen deutlich wahrnehmbar dem Körper entzogen wird.

Im Patent DE 43 08 445 A1 werden verschiedene Verfahren bzw. Patentschriften (EP-B-0 057 839; WO-88/01878; EP 0 453 286) zur Herstellung von Gelschäumen mit Luft, Stickstoff und Kohlendioxid genannt. Die Reduzierung des spezifischen Gewichts und die damit verbundene Verringerung der Wärmekapazität sind im gewünschten Maße erreicht, die Gele weisen aber den Nachteil auf, dass die gebildeten Zellen bei Druckbeanspruchung an den Zellinnenwänden aufgrund des sehr hohen Selbstklebeverhaltens der stets untervernetzten Reaktionsprodukte auf Basis von Polyolen und Polyisocyanaten verkleben. Darüber hinaus stellen die Zellen eine Schwächung der Gelmatrix dar, die sich negativ auf die mechanischen Eigenschaften, wie Bruchdehnung und Zugfestigkeit auswirkt. Auch kehrt ein zelliges Gel nach Belastung langsamer in seine Ausgangsposition zurück. Des weiteren können Schrumpfprobleme auftreten, wie sie aus der Verarbeitung von Polyurethanschaumstoffen bekannt sind.

Eine Gelmasse, die eine deutliche Reduzierung des Gewichts und der Wärmekapazität unter Beibehaltung der typischen Geleigenschaften, wie z.B. der Aufnahme von Scherkräften möglich macht, bedeutet eine deutliche technische Verbesserung.

Die Aufgabe der Erfindung besteht daher darin, einen Werkstoff zu entwickeln, der die o.g. Nachteile vermeidet und die typischen vorteilhaften Geleigenschaften mit einem niedrigen spezifischen Gewicht einer insgesamt geringeren Wärmeleitfähigkeit sowie guter Haltbarkeit und dauerhaft gleichbleibenden Gebrauchseigenschaften verbindet.

Die Aufgabe wird erfindungsgemäß dadurch gelöst, dass der Werkstoff aus einem Polyurethan-Gel elastische Mikrohohlkugeln als Füllstoff enthält. Die elastischen Mikrohohlkugeln reduzieren sowohl das spezifische Gewicht als auch die spezifische Wärmeleitfähigkeit des Werkstoffes insgesamt deutlich. Anders als die Zellen eines Schaums sind die Mikrohohlkugeln innerhalb des Polyurethan-Gels dauerhaft stabil, so dass die erzielten vorteilhaften Gebrauchseigenschaften über die gesamte Lebensdauer des Produktes erhalten bleiben.

Die elastischen Mikrohohlkugeln bestehen vorzugsweise aus polymerem Material, weiter vorzugsweise einem Polyolefin, wie z.B. Acrylnitril-Copolymer oder Polyvinylidenchlorid.

In Weiterbildung der Erfindung bestehen die Mikrohohlkugeln aus expandierten polymeren Materialien, vorzugsweise expandierten Polyolefinen.

Es ist vorteilhaft, wenn die elastischen Mikrohohlkugeln mit einer Deckschicht aus einem anorganischen Material, vorzugsweise Calciumcarbonat beschichtet sind. Die anorganische Beschichtung soll ein Agglomerieren der Mikrohohlkugeln innerhalb des Gels verhindern. Als anorganisches Material kommt bevorzugt Calciumcarbonat zum Einsatz, obwohl andere anorganische Materialien, insbesondere anorganische Salze möglich sind. Im übertragenen Sinne handelt es sich bei dieser Ausführungsform der elastischen Mikrohohlkugeln um ein hochvoluminös expandiertes Calciumcarbonat.

Die in den Werkstoff eingearbeiteten elastischen Mikrohohlkugeln besitzen vorzugsweise einen Durchmesser von 10 µm bis 150 µm. Der Anteil der Mikrohohlkugeln in dem Werkstoff beträgt vorzugsweise zwischen etwa 0,1 Gew.-% bis 10 Gew.-%. Generell ist der Anteil der Mikrohohlkugeln in Abhängigkeit von dem gewählten Gel frei wählbar und unterliegt nur der Bedingung, dass sich ein stabiler Werkstoff mit den gewünschten Eigenschaften ergeben soll.

Für das Gel wird vorteilhafter Weise ein untervernetztes Polyurethan auf der Basis von Polyolen und Polyisocyanaten oder von Polyethern und Polyisocyanaten eingesetzt. Die Gelmassen können dabei insbesondere mit Rohstoffen einer Isocanat-Funktionalität der Polyolkomponente von mindestend 5,2, vorzugsweise von mindestens 6,5, insbesondere von mindestens 7,5 hergestellt werden.

Gemäß einem vorteilhaften Ausführungsbeispiel kann die Polyolkomponente zur Herstellung des Gels a) aus einem Gemisch aus einem oder mehreren Polyolen mit Hydroxylzahlen unter 112 und b) einem oder mehreren Polyolen mit Hydroxylzahlen im Bereich von 112 bis 116 bestehen, wobei das Gewichtsverhältnis der Komponente a) zu Komponente b) zwischen 90:10 und 10:90 liegt, die Isocyanat-Kennzahl des Reaktionsgemisches im Bereich 15 bis ca. 60 liegt und das Produkt aus Isocyanat-Funktionalität und Funktionalität der Polyolkomponente mindestens 6,15 beträgt.

Gemäß einem weiteren vorteilhaften Ausführungsbeispiel kann die Polyolkomponente zur Herstellung des Gels aus einem oder mehreren Polyolen mit einem Molekulargewicht zwischen 1.000 und 12.000 und einer OH-Zahl zwischen 20 und 112 bestehen, wobei das Produkt der Funktionalitäten der Polyurethan bildenden Komponenten mindestens 5,2 beträgt und die Isocyanatkennzahl zwischen 15 und 60 liegt. Weiter bevorzugt können als Isocyanate zur Gelherstellung solche der Formel Q(NCO)ₙ eingesetzt werden, wobei in der Formel n für 2 bis 4 steht und Q einen aliphatischen Kohlenwasserstoffrest mit 8 bis 18 Kohlenstoffatomen, einen cycloaliphatischen Kohlenwasserstoffrest mit 4 bis 15 Kohlenstoffatomen, einen aromatischen Kohlenwasserstoffrest mit 6 bis 15 Kohlenstoffatomen oder einen araliphatischen Kohlenwasserstoffrest mit 8 bis 15 Kohlenstoffatomen bedeutet.

Die Isocyanate können in reiner Form verwendet werden oder in Form der üblichen Isocyanat-Modifizierungen, wie sie dem Fachmann auf diesem Gebiete bekannt sind. Für die Modifizierungen der Isocyanatkomponente kommen vor allem in Frage: Urethanisierung, Allophanisierung oder Biurethisierung.

Zur Lösung der Aufgabe ist weiter erfindungsgemäß ein spezielles Verfahren zur Herstellung des Werkstoffs aus dem Polyurethan-Gel und den Mikrohohlkugeln vorgesehen, welches dadurch gekennzeichnet ist, dass in das Polyurethan-Gel während seiner Herstellung unter weitgehender Vermeidung eines Luft- oder Gaseintrags elastische Mikrohohlkugeln als Füllstoff eingearbeitet werden.

Bevorzugt werden die erfindungsgemäßen Mikrohohlkugeln in die Polyolkomponente eingearbeitet. Eine Verarbeitung mit den Mikrohohlkugeln im Isocyanat ist ebenfalls möglich. Die Einarbeitung der erfindungsgemäß einzusetzenden Mikrohohlkugeln muß so vorgenommen werden, daß in das Polyol oder Isocyanat keine zusätzliche Luft mit eingearbeitet wird. Die Luftblasen würden die bereits oben erwähnten negativen Eigenschaften für das Endprodukt bewirken. Insbesondere wird die Weiterreißfestigkeit deutlich reduziert, da die Luftblasen als Sollbruchstellen wirken.

Vorzugsweise sind die Mikrohohlkugeln aus einem polymeren Material gebildet, insbesondere einem Polyolefin, wie z.B. einem Acrylnitril-Copolymer oder Polyvinylidenchlorid und sind vor ihrer Verarbeitung mit einem anorganischen Material, vorzugsweise Calciumcarbonat beschichtet worden. Die Mikrohohlkugeln werden vorteilhaft unter Zuführung hoher Scherenergie mit einem Hochgeschwindigkeitsmischer oder mit Hilfe eines Disolvers in wenigstens eine vorgelegte Komponente für die Polyurethanbildung eingemischt.

Das Einarbeiten der Mikrohohlkugeln sollte so durchgeführt werden, dass ein hoher Benetzungsgrad der einzelnen Partikel gewährleistet ist und dass das Unterarbeiten von Luft oder Gas möglichst weitgehend vermieden wird. Für diese Aufgabe sind bevorzugt Verfahren zur Einarbeitung von pulverförmigen Produkten unter Vakuum geeignet. Hier sind insbesondere zwei Methoden besonders zu nennen:

Beim ersten Verfahren befindet sich Polyol oder Isocyanat in der unter Vakuum stehenden Mischkammer eines Hochgeschwindigkeitsmischers (Fa. Grieser, Maschinenbau- und Service GmbH, Chemiestraße 19, Lampertheim). Die mit CaCO₃ beschichteten Mikrohohlkugeln werden unterhalb des Flüssigspiegels über das in der Mischkammer angelegte Vakuum eingesaugt. Es ist darauf zu achten, dass die erfindungsgemäßen Partikel direkt im Bereich der maximalen Winkelgeschwindigkeit des mit einer hohen Drehzahl arbeitenden Rührers eingesaugt werden. Die hohe Scherenergie führt zu einer homogenen Dispersion. Die durch dieses Verfahren zusätzlich eingesaugte Luft wird durch das wirkende Vakuum aus der Mischung unter ständigem Rühren entfernt.

Beim zweiten getesteten Verfahen befindet sich die mit den Mikrohohlkugeln anzureichernde Reaktionskomponente in einem offenem Tank und wird mittels eines Dissolvers umgepumpt. In der Dissolverscheibe (Fa. YSTRAL, Ballrechten-Dottingen) wird ein Unterdruck erzeugt, mit dem die pulverförmigen Teilchen in die Reaktionskomponente eingesaugt werden. Hierdurch ist eine maximale Benetzung mit entsprechend geringer Luftbeladung gewährleistet. Die eingearbeitete Luft wird durch Anlegen eines Vakuums unter Umrühren der mit Mikrohohkugeln versetzten Reaktionskomponente entzogen. In drei-minütigen Intervallen wird das Rührwerk ein- bzw. ausgeschaltet. Durch die langsame Rotation des Flügelrührers sammelt sich zusätzlich die aufsteigende Luft unterhalb der Flügelflächen, so dass sich größere Luftblasen bilden. Bei Stillstand des Rührers steigen die großen Luftblasen beschleunigt auf, was die Evakuierung deutlich beschleunigt.

Die mit den Mikrohohlkugeln beladene Reaktionskomponente wird zwechmäßigerweise für die Weiterverarbeitung in den Tagesbehälter einer 2 K-Maschine gefüllt. Zur Vermeidung einer Separation der spefifisch leichten Hohlkugeln wird die erfindungsgemäße Dispersion bevorzugt ständig im Kreislauf gefahren.

### BEISPIELE

Es wurden gemäß der oben beschriebenen Verfahren nachfolgende Gel-Platten mit beidseitig aufgebrachtem Trennmittel mit den im europäischen Patent EP 57838 und EP 511570 beschriebenen Isocyanat- und Polyol-Rohstoffen hergestellt:

Bei den nachstehenden Beispielen wurden die Mikrohohkugeln in die Polyolkomponente eingearbeitet. Der benötigte Polyolmassestrom wird über eine Präzisionspumpe zu einer Dosierpistole mit nachgeschaltetem dynamischen Mischer gepumpt. Die für die Polyaddition notwendige Isocyanatkomponente wird auch mittels einer separaten Hochpräzisionspumpe zu dem dynamischen Mischer geführt und homogen mit der Polyolkomponente gemischt. Es ist besonders darauf zu achten, dass die zwei Komponenten homogen gemischt werden, so dass die Endprodukteigenschaften gleichmäßig sind. Die homogen aufbereiteten zwei Komponenten werden z.B. in ein formgebendes Werkzeug, wie z.B. Platten gegossen. Durch zusätzliche Erwärmung der Werkzeuge wird die Polyadditionsreaktion beschleunigt.

Bei der Komponente A handelt es sich um ein trifunktionelles Polyetherpolyol der OH-Zahl 28. Es wird hergestellt durch Propoxylierung von Trimethylolpropan mit anschließender Ethoxylierung (PO/EO = 83/17). Zusätzlich enthält die Komponente A 0,1 Gew.-% Coscat 83 (Handelsprodukt der Cosan Chemical Co.).

Bei der Komponente B handelt es sich um ein modifiziertes aliphatisches Isocyanat der Bayer AG: Desmodur KA 8712.

### BEISPIEL 1:

Dicke 3,0 mm
Mischungsverhältnis: 100:13 (Komp. A: Komp. B)
Komponente A: 97 Gew-TL Polyol + 3 Gew-TL hochelastische Mikrohohlkugeln
(Dualite M 6001 AE, Lehmann & Voss & Co., Hamburg)
Komponente B: Isocyanat

### BEISPIEL 2:

Dicke: 3,0 mm
Mischungsverhältnis: 100:13 (Komp. A: Komp.B)
Komponente A: 97 Gew-TL Polyol + 3 Gew-TL hochelastische Mikrohohlkugeln
(Dualite MS 7000, Lehmann & Voss & Co., Hamburg)
Komponente B: Isocyanat

### GEGENBEISPIEL 1:

Dicke: 3,0 mm
Mischungsverhältnis: 100:13 (Komp. A: Komp. B)
Komponente A: 100 Gew-TL Polyol
Komponente B: Isocyanat

### ERGEBNISSE:

| | Rohdichte [kg/m³] DIN 53420 | Zugfestigkeit [Kpa] DIN 53571 | Bruchdehnung [%] DIN 53571 |
|---|---|---|---|
| Beispiel 1 | 864 | 892 | 335 |
| Beispiel 2 | 756 | 767 | 388 |
| Gegenbeispiel 1 | 1059 | 455 | 343 |

Die Wärmeleitfähigkeit wurde durch die Zugabe der hochelastischen Mikrohohlkugeln deutlich reduziert, was durch direkten Körperkontakt nachgewiesen wurde. Testpersonen konnten die mit Hohlkugeln hergestellten Platten mit verbundenen Augen von konventionellen Gelplatten unterscheiden. Nach einheitlicher Aussage aller Testpersonen wurden die mit Hohlkugeln hergestellten Platten als "wärmer" beurteilt. Dies läßt sich mit der niedrigeren Wärmeleitfähigkeit der mit den Hohlkugeln hergestellten Platten erklären.

## Patentansprüche

1. Werkstoff aus einem Polyurethan-Gel, **dadurch gekennzeichnet, dass** der Werkstoff elastische Mikrohohlkugeln als Füllstoff enthält.

2. Werkstoff nach Anspruch 1, **dadurch gekennzeichnet, dass** die Mikrohohlkugeln aus polymerem Material, vorzugsweise Polyolefin bestehen.

3. Werkstoff nach Anspruch 2, **dadurch gekennzeichnet, dass** das polymere Material expandiertes polymeres Material ist.

4. Werkstoff nach einem der Ansprüche 1 bis 3, **dadurch gekennzeichnet, dass** die Mikrohohlkugeln mit einer Deckschicht aus einem anorganischen Material, vorzugsweise Calciumkarbonat, beschichtet sind.

5. Werkstoff nach einem der Ansprüche 1 bis 4, **dadurch gekennzeichnet, dass** die Mikrohohlkugeln einen Durchmesser von 10 µm bis 150 µm besitzen.

6. Werkstoff nach einem der Ansprüche 1 bis 5, **dadurch gekennzeichnet, dass** der Anteil der Mikrohohlkugeln in dem Werkstoff von 0,1 bis 10 Gew.-% beträgt.

7. Werkstoff nach einem der Ansprüche 1 bis 6, **dadurch gekennzeichnet, dass** für das Gel ein untervernetztes Polyurethan auf der Basis von Polyolen und Polyisocyanaten oder Polyethern und Polyisocyanathen eingesetzt wird.

8. Werkstoff nach einem der Ansprüche 1 bis 7, **dadurch gekennzeichnet, dass** die Gelmassen mit Rohstoffen einer Isocanat-Funktionalität der Polyolkomponente von mindestens 5,2, vorzugsweise von mindestens 6,5, insbesondere von mindestens 7,5 hergestellt werden.

9. Werkstoff nach einem der Ansprüche 1 bis 8, **dadurch gekennzeichnet, dass** die Polyolkomponente zur Herstellung des Gels aus einem Gemisch aus
- a) einem oder mehreren Polyolen mit Hydroxylzahlen unter 112 und
- b) einem oder mehreren Polyolen mit Hydroxylzahlen im Bereich von 112 bis 600 besteht,
- wobei das Gewichtsverhältnis der Komponente a) zu Komponente b) zwischen 90:10 und 10:90 liegt, die Isocyanat-Kennzahl des Reaktionsgemisches im Bereich von 15 bis 60 liegt und das Produkt aus Isocyanat-Funktionalität und Funktionalität der Polyolkomponente mindestens 6 beträgt.

10. Werkstoff nach einem der Ansprüche 1 bis 8, **dadurch gekennzeichnet, dass** die Polyolkomponente zur Herstellung des Gels aus einem oder mehreren Polyolen mit einem Molekulargewicht zwischen 1000 und 12000 und einer OH-Zahl zwischen 20 und 112 besteht, wobei das Produkt der Funktionalitäten der polyurethanbildenden Komponenten mindestens 5 beträgt und die Isocyanat-Kennzahl zwischen 15 und 60 liegt.

11. Werkstoff nach einem der Ansprüche 1 bis 10, **dadurch gekennzeichnet, dass** man als Isocyanate zur Gelherstellung solche der Formel Q(NCO)ₙ einsetzt, in der n für 2 bis 4 steht und Q einen aliphatischen Kohlenwasserstoffrest mit 8 bis 18 C-Atomen, einen cycloaliphatischen Kohlenwasserstoffrest mit 4 bis 15 C-Atomen, einen aromatischen Kohlenwasserstoffrest mit 6 bis 15 C-Atomen oder einen araliphatischen Kohlenwasserstoffrest mit 8 bis 15 C-Atomen bedeutet.

12. Werkstoff nach einem der Ansprüche 1 bis 11, **dadurch gekennzeichnet, dass** das Polyurethan mit Isocyanaten in reiner Form oder mit urethanisierten, allophanisierten, biurethisierten oder funktionell entsprechend modifizierten Isocyanaten hergestellt wurde.

13. Verfahren zur Herstellung eines Werkstoffes aus einem Polyurethangel, **dadurch gekennzeichnet, dass** in das Polyurethan-Gel während seiner Herstellung unter weitgehender Vermeidung eines Luft- oder Gaseintrags elastische Mikrohohlkugeln als Füllstoff eingearbeitet werden.

14. Verfahren nach Anspruch 12, **dadurch gekennzeichnet, dass** die Mikrohohlkugeln zu der Polyolkomponente des Polyurethangels zugegeben und mit dieser weiterverarbeitet werden.

15. Verfahren nach Anspruch 12, **dadurch gekennzeichnet, dass** die Mikrohohlkugeln zu der Polyisocyanatkomponente und mit dieser weiterverarbeitet werden.

16. Verfahren nach einem der Ansprüche 12 bis 14, **dadurch gekennzeichnet, dass** die Mikrohohlkugeln aus einem polymeren Material gebildet werden, vorzugsweise einem Polyolefin, und vor ihrer Verarbeitung mit einem anorganischen Material, vorzugsweise Calciumkarbonat beschichtet werden.

17. Verfahren nach einem Ansprüche 1 bis 15, **dadurch gekennzeichnet, dass** die Mikrohohlkugeln unter Zuführung hoher Scherenergie mit einem Hochgeschwindigkeitsmischer in wenigstens eine vorgelegte Polyurethankomponente eingemischt werden.

18. Verfahren nach einem der Ansprüche 12 bis 15, **dadurch gekennzeichnet, dass** die Mikrohohlkugeln mittels eines Disolvers mit wenigstens einer vorgelegten Polyurethankomponente vermengt werden.
